# EUROPÄISCHE PATENTSCHRIFT

(11) **EP 3 852 938 B1**
(45) Veröffentlichungstag und Bekanntmachung des Hinweises auf die Patenterteilung: **16.08.2023**
(21) Anmeldenummer: 19772664.9
(22) Anmeldetag: 11.09.2019
(51) Int. Cl.: B01D 3/34, B05B 12/18, B05B 12/32, B05B 13/04, B05B 16/00

(54) **OBERFLÄCHENBEHANDLUNGSANLAGE UND VERFAHREN ZUR OBERFLÄCHENBEHANDLUNG VON FAHRZEUGKAROSSERIEN**
SURFACE-TREATMENT FACILITY AND METHOD FOR SURFACE-TREATING VEHICLE BODIES
INSTALLATION DE TRAITEMENT DE SURFACE ET PROCÉDÉ PERMETTANT LE TRAITEMENT DE SURFACE DE CARROSSERIES DE VÉHICULE

(30) Priorität: 21.09.2018 DE 102018123270
(43) Veröffentlichungstag der Anmeldung: 28.07.2021
(73) Patentinhaber: Eisenmann GmbH, 71032 Böblingen (DE)
(72) Erfinder: SCHULZE, Herbert, 71134 Aidlingen (DE)
(74) Vertreter: Ostertag & Partner Patentanwälte mbB
(86) Internationale Anmeldenummer: PCT/EP2019/074237
(87) Internationale Veröffentlichungsnummer: WO 2020/058063

(56) Entgegenhaltungen:
- EP-A1- 3 704 001
- DE-A1- 3 906 857
- DE-A1-102010 045 010
- DE-A1-102016 004 484
- DE-U1-202017 106 843
- JP-A- 2005 280 582
- JP-U- H04 118 168
- US-B2- 8 590 482

## Beschreibung

### HINTERGRUND DER ERFINDUNG

### 1. Gebiet der Erfindung

Die Erfindung betrifft die Oberflächenbehandlung von Fahrzeugkarosserien, bei der flurgebundene Transportwagen mit eigenen mitgeführten Antrieben die Fahrzeugkarosserien durch einen Behandlungsraum fördern.

### 2. Beschreibung des Standes der Technik

Fahrzeugkarosserien durchlaufen während ihrer Herstellung viele verschiedene Arbeitsschritte, in denen Arbeiten unterschiedlicher Art an den Fahrzeugkarosserien durchgeführt werden. Zu solchen Arbeiten zählen Maßnahmen, bei denen aktiv auf die Fahrzeugkarosserie eingewirkt wird. Dazu zählt beispielsweise das Zusammenfügen von Einzelteilen im Rohbau, die Applikation von Lacken oder anderem Material oder das Trocknen von zuvor aufgebrachten Beschichtungen. Daneben gibt es Maßnahmen, bei denen keine aktive Einwirkung auf die Fahrzeugkarosserie erfolgt, wie dies beispielsweise beim Abdunsten der Fahrzeugkarosserie der Fall ist. In einer Oberflächenbehandlungsanlage werden die Fahrzeugkarosserien nach dem Rohbau in den unterschiedlichen Bereichen auf unterschiedliche Weise aktiv oder passiv behandelt.

Bei den bisher bekannten Oberflächenbehandlungsanlagen fördern spurgebundene Fördersysteme die Fahrzeugkarosserien in weitgehend unveränderlicher Reihenfolge durch die verschiedenen Arbeitsstationen. Die starre Reihenfolge von Arbeitsschritten schränkt jedoch die Flexibilität bei der Fertigung ein.

Eine Veränderung des Behandlungsablaufes ist bei solchen spurgebundenen Fördersystemen - wenn überhaupt - nur möglich, wenn Umsetzvorrichtungen vorhanden sind. Dabei müssen entsprechende Nebenstrecken vorgehalten werden, wodurch der bauliche Aufwand und die damit verbundenen Kosten sehr hoch werden.

Aus der DE 10 2016 004 484 A1 ist eine Vorrichtung zum Behandeln von Fahrzeugkarosserien bekannt, die einen von einem Gehäuse begrenzten Behandlungstunnel und einen darunter angeordneten getrennten Fahrraum aufweist. Im Fahrraum ist ein Transportwagen verfahrbar angeordnet, der eine Befestigungseinrichtung zum Befestigen der Fahrzeugkarosserien umfasst. Der Transportwagen wird mittels eines eigenen mitgeführten Antriebsmotors auf einer Tragschiene spurgebunden verfahren. Der Fahrraum kann beispielsweise durch das Einlassen von Luft mittels Düsen oder mittels Dichtungen von dem Behandlungstunnel atmosphärisch getrennt werden.

Ähnliche Vorrichtungen offenbaren auch die Dokumente DE 39 06 857 A1, DE 10 2010 045 010 A1, DE 10 20 2017 106 843 U1, JP H04 118168 U und JP 2005 280 282 A. Auch dort sind die Fahrzeuge jedoch nicht frei navigierbar.

Aus der US 8,590,482 B2 ist ein spurgebundener Transportwagen mit einem Kollisionsvermeidungssensor bekannt.

### ZUSAMMENFASSUNG DER ERFINDUNG

Aufgabe der Erfindung ist es, eine Oberflächenbehandlungsanlage zur Oberflächenbehandlung von Fahrzeugkarosserien anzugeben, welche kurzfristige und individuelle Änderungen des Fertigungsablaufs ermöglicht.

Diese Aufgabe wird gelöst durch eine Oberflächenbehandlungsanlage zur Oberflächenbehandlung von Fahrzeugkarosserien mit den Merkmalen des Anspruchs 1.

Da die Transportwagen ihre eigenen mitgeführten Antriebe haben, können die an dem jeweiligen Transportwagen befestigten und zu behandelnden Fahrzeugkarosserien flexibel und unabhängig voneinander gefördert werden. Somit können auch kurzfristige und individuelle Änderungen des Fertigungsablaufs einer einzelnen Fahrzeugkarosserie realisiert werden.

Ferner kann durch das Erzeugen der verschiedenen Atmosphären in dem Behandlungsraum und in dem Fahrbereich vermieden werden, dass die Transportwagen der zweiten Atmosphäre ausgesetzt sind, die in dem Behandlungsraum herrscht. Dadurch können Schäden an empfindlichen Bauteilen des Transportwagens vermieden und die Gefahr von Explosionen verringert werden. Ferner bleibt der Transportwagen frei von Behandlungsstoffen, die in den Behandlungsraum eingeführt werden oder dort entstehen. Bei diesen Behandlungsstoffen kann es sich beispielsweise um Overspray, der beim Lackieren mit Rotationszerstäubern entsteht, handeln. Weil solche Behandlungsstoffe sich nicht auf den Rädern des Transportwagens absetzen können, wird die Haftung zwischen den Rädern des Transportwagens und dem Fahrboden nicht beeinträchtigt. Zur zusätzlichen Sicherheit gegen Brände können die Transportwagen Feuerlöscheinrichtungen mitführen.

Darüber hinaus wird durch das Erzeugen der verschiedenen Atmosphären die Wartung der Transportwagen in dem Fahrbereich erleichtert. Bei einer Beschichtungsanlage muss beispielsweise eine Schnellentlüftung der Beschichtungsanlage durchgeführt werden, bevor eine Person den Behandlungsraum betreten kann. Dadurch werden für den Menschen schädliche Stoffe aus der Atmosphäre des Behandlungsraums entfernt. Aufgrund der unabhängig von dem Behandlungsraum erzeugten ersten Atmosphäre im Fahrbereich sind dort keine schädlichen Stoffe enthalten, so dass eine Schnellentlüftung des Fahrbereichs vor dem Zutritt von Personen nicht notwendig ist.

Die Transportwagen können kontinuierlich oder taktend in dem Fahrbereich fahren. Bei taktender Fahrweise können die Transportwagen zeitgleich oder zeitlich versetzt fahren.

Die Transportwagen orientieren sich dabei im Fahrbereich bevorzugt optisch an Strukturen im Fahrbereich, beispielsweise an Markierungen am Boden des Fahrbereichs. Alternativ können auch elektronische Marker und/oder Funksysteme vorgesehen sein, mit deren Hilfe sich die Transportwagen im Fahrbereich orientieren. Ferner kann auch ein Strichcodesystem im Fahrbereich vorgesehen sein, mit Hilfe dessen die Position und Geschwindigkeit der Transportwagen gesteuert wird. Denkbar ist auch eine in dem Fahrbereich angeordnete mechanische Führung zum Positionieren der Transportwagen im Fahrbereich. Alternativ oder zusätzlich zu Signalgebern oder Kamerasystemen auf den Transportwagen können ortsfeste Kamerasysteme oder andere Sensoren vorgesehen sein, die den Ort und/oder die Geschwindigkeit der Transportwagen erfassen und an eine Zentralsteuerung weiterleiten.

Die erste Atmosphäre und/oder die zweite Atmosphäre können insbesondere aktiv erzeugt werden. Bei einer aktiven Erzeugung umfasst die Oberflächenbehandlungsanlage Mittel, die vorzugsweise energiebetrieben sind und die erste und/oder die zweite Atmosphäre im Vergleich zu der Umgebung und/oder zu der jeweils anderen Atmosphäre verändert. Darüber hinaus kann unter dem Begriff "Erzeugen" auch ein passives Aufrechterhalten einer bereits vorhandenen Atmosphäre verstanden werden. In diesem Fall wird eine bereits vorhandene Atmosphäre, z.B. eine in einer Fertigungshalle bestehende Atmosphäre, in dem betreffenden Bereich (normalerweise dem Fahrbereich) aufrechterhalten. Dies kann unter Umständen Maßnahmen wie Dämmwände, Lüftungskanäle oder Durchlässe erfordern, die eine Ausbreitung der Außenatmosphäre in den betreffenden Bereich ermöglichen. In den meisten Fällen wird in dem Behandlungsraum die zweite Atmosphäre aktiv erzeugt, während die im Fahrbereich herrschende erste Atmosphäre passiv erzeugt wird. Es sind aber auch Fälle denkbar, in denen sowohl die erste als auch die zweite Atmosphäre aktiv erzeugt werden.

Die Oberflächenbehandlungsanlage kann am Ein- und Austritt des Behandlungsraums Tore oder Schleusen umfassen, durch welche die zu behandelnden Fahrzeugkarosserien bewegt werden.

Unter einer im Wesentlichen gasdichten Begrenzung durch das Gehäuse ist zu verstehen, dass das in dem Behandlungsraum enthaltene Gas zumindest bei geschlossenen Toren oder Schleusen allenfalls in vernachlässigbar geringen Mengen (etwa durch den Spalt hindurch) aus dem Behandlungsraum strömen kann.

Bevorzugt unterscheidet sich die erste Atmosphäre durch zumindest einen Parameter von der zweiten Atmosphäre, wobei der Parameter ausgewählt ist aus der Gruppe bestehend aus: Temperatur, Druck, Luftfeuchtigkeit, chemische Zusammensetzung, Strömungsgeschwindigkeit, Strömungsrichtung und Partikelbelastung.

Wie oben bereits erwähnt, ist es bei einer Beschichtungsanlage vorteilhaft, die Partikelbelastung im Bereich des Transportwagens gering zu halten. Dadurch wird insbesondere ein Niederschlagen von Overspray am Boden des Fahrbereichs und/oder an dem Transportwagen selbst vermieden.

Wenn der Behandlungsraum der Trocknung dient, sollte die Temperatur im Bereich des Transportwagens niedriger als im Behandlungsraum gehalten werden, um eventuelle Schäden an elektronischen oder anderen empfindlichen Bauteilen des Transportwagens zu verhindern. Dadurch sind keine aufwendigen Kühlungs- oder Wärmeschutzmaßnahmen an dem Transportwagen notwendig. Ferner kann durch die unterschiedliche Temperierung des Behandlungsraums und des Fahrbereichs der Heizungs- und Kühlungsbedarf individuell angepasst werden, wodurch der Energieverbrauch der Anlage gesenkt wird.

Bei einem Ausführungsbeispiel ist eine Atmosphärentrenneinrichtung vorgesehen, die einen Atmosphärenaustausch zumindest von dem Behandlungsraum zu dem Fahrbereich erschwert oder verhindert.

Einen Atmosphärenaustausch in umgekehrter Richtung, d.h. von dem Fahrbereich zu dem Behandlungsraum, zu erschweren oder zu verhindern ist zusätzlich möglich, jedoch ist das Ziel der getrennten Atmosphären die für den Transportwagen unter Umständen schädliche zweite Atmosphäre des Behandlungsraums von dem Transportwagen fern zu halten. Folglich ist es in der Regel nicht notwendig, ein Eindringen der Atmosphäre des Fahrbereichs in den Behandlungsraum zu verhindern oder zu erschweren.

Die Atmosphärentrenneinrichtung kann aktiv oder passiv sein.

Als passive Atmosphärentrenneinrichtung kann eine Abdichtvorrichtung vorgesehen sein, die in oder an dem Spalt angeordnet ist. Eine solche passive Abdichtvorrichtung kann insbesondere Lamellen, Klappen, Abdichtmanschetten, Abdichtbürsten, eine Sandtassendichtung oder eine Kombination aus diesen Abdichtvorrichtungen umfassen.

Besonders vorteilhaft ist es, wenn eine solche passive Abdichtvorrichtung elastische Eigenschaften aufweist. Damit ist der Spalt mittels der Abdichtvorrichtung vollständig verschlossen, wenn sich kein Teil der Befestigungseinrichtung des Transportwagens in dem Spalt befindet. Wenn ein Transportwagen durch die Anlage fährt, wird die Abdichtvorrichtung durch Teile der Befestigungseinrichtung ausgelenkt.

Als aktive Atmosphärentrenneinrichtung kann ein Gebläse vorgesehen sein, mittels dessen eine Luftströmung erzeugbar ist, die einen Atmosphärenaustausch zumindest von dem Behandlungsraum zu dem Fahrbereich erschwert oder verhindert. Das Gebläse kann an dem jeweiligen Transportwagen angeordnet und befestigt sein, jedoch ist auch ein ortsfest im oder am Fahrbereich montiertes Gebläse denkbar.

Bevorzugt ist die Luftströmung ein Luftvorhang, der den Spalt zumindest annähernd luftdicht verschließt. Unter dem Begriff Luftvorhang ist eine im Wesentlichen laminare Strömung in Form einer geschlossenen Fläche zu verstehen. Die Strömung wird mittels einer Schlitzdüse oder mehrerer Düsen erzeugt, die entlang einer geraden oder gekrümmten Linie angeordnet sind. Neben Luft können auch andere Gasgemische oder ein Reingas aus der oder den Düsen austreten.

Bei einem Luftvorhang verläuft die Luftströmung quer zur Richtung, entlang der bei einem Druckgefälle Luft zwischen dem Behandlungsraum und dem Fahrbereich strömen würde.

Der Luftvorhang kann beispielsweise von ortsfesten Gebläsen über die gesamte Länge des Spaltes hinweg erzeugt werden. Falls eine Abdichtvorrichtung den Spalt abdichtet, kann der Luftvorhang auch von einem Gebläse, das von dem Transportwagen mitgeführt wird, lokal erzeugt werden, um die Dichtwirkung im Bereich des Transportwagens zu erhöhen.

Alternativ kann die Luftströmung in den Behandlungsraum eingeblasen werden, um ein Eintreten der Luft des Behandlungsraums in den Fahrbereich zu verhindern. In diesem Fall verläuft die Luftströmung entgegen der Richtung, entlang der bei einem Druckgefälle Luft zwischen dem Behandlungsraum und dem Fahrbereich strömen würde. Dadurch wirkt der Impuls der eingeblasenen Luft in den Behandlungsraum hinein, wodurch die Luft im Behandlungsraum stärker zurückdrängt wird. Damit kann ein Eindringen von Luft aus dem Behandlungsraum in den Fahrbereich verhindert werden.

Bei einem Ausführungsbeispiel ist in dem Fahrbereich der Transportwagen mittels eines in dem Fahrbereich installierten und von dem mitführbaren Antrieb unabhängigen Antriebssystem zumindest zeitweise bewegbar. Durch dieses zusätzliche Antriebssystem ist der Antrieb des Transportwagens durch die Oberflächenbehandlungsanlage unabhängig von den Reibverhältnissen zwischen den Rädern des Transportwagens und dem Fahrboden. Damit ist ein schlupffreier Antrieb der Transportwagen bei schlechten Reibverhältnissen zwischen den Rädern des Transportwagens und dem Fahrboden möglich. Dies erleichtert eine präzise Positionierung der Fahrzeugkarosserie im Behandlungsraum, z.B. relativ zu dort angeordneten Applikationsgeräten. Zusätzlich können Kamerasysteme im Behandlungsraum angeordnet sein, welche die Positionierung der Fahrzeugkarosserie unterstützen.

Vorteilhaft kann auch ein gleichzeitiger Betrieb beider Antriebe sein. Damit sind, bei gleichzeitig hoher Positioniergenauigkeit, variable Geschwindigkeiten und Abstände der Transportwagen zueinander einstellbar. Des Weiteren sind höhere Geschwindigkeiten in Umgebungen möglich, in denen die Haftreibung zwischen den Rädern des Transportwagens und dem Fahrboden gering ist.

Bevorzugt ist das zusätzliche Antriebssystem zumindest in einem Teil des Fahrbereichs formschlüssig mit dem Transportwagen verbunden. Dadurch ergibt sich ein besonders zuverlässiger und präziser Antrieb der Transportwagen unabhängig von den Reibverhältnissen im Fahrbereich. Des Weiteren ist es dadurch möglich, auch größere Steigungen mit den Transportwagen zu überwinden. Bevorzugt als Antriebssysteme dieser Art sind Kettenförderer, Zahnradförderer oder Zugförderer.

Der mitführbare Antrieb kann von außen mit Energie versorgt werden. Günstiger ist es im Allgemeinen, wenn ein von dem Transportwagen mitführbarer Energiespeicher vorgesehen ist, der den mitführbaren Antrieb mit Energie versorgt. Dadurch werden keine Leitungen zur Energieversorgung der Transportwagen benötigt, die ein Hindernis und eine Gefahr im Betrieb der Anlage sein können.

Bei einem Ausführungsbeispiel ist eine Verstellvorrichtung vorgesehen, die dazu eingerichtet ist, die Befestigungseinrichtung und die daran befestigte Fahrzeugkarosserie in variabler Höhe im Behandlungsraum bereitzustellen. Dadurch ergibt sich eine besonders flexible Handhabung der zu behandelnden Fahrzeugkarosserien, wodurch die Oberflächen der Fahrzeugkarosserie für die behandelnden Applikationseinrichtungen in dem Behandlungsraum besser zugänglich sind. Eine derartige Verstellvorrichtung kann auch dazu genutzt werden, die Fahrzeugkarosserien beim Behandeln im Behandlungsraum zu stabilisieren, indem die Fahrzeugkarosserien durch Absenken auf Schienen oder andere Führungselemente abgesetzt oder durch Anheben gegen Schienen oder andere Führungselemente angedrückt werden.

Je nach Art der Behandlung kann es günstig sein, wenn die Verstellvorrichtung die Fahrzeugkarosserien zusätzlich neigen und drehen kann.

Die Verstellvorrichtung ist vorzugsweise pneumatisch betrieben, jedoch kann die Verstellvorrichtung auch mittels eines oder mehrerer Elektromotoren angetrieben werden.

Die Halterungseinrichtung kann Teil der Verstellvorrichtung sein, es kommen aber auch konstruktiv getrennte Einheiten in Betracht.

Wenn auf eine Verstellvorrichtung verzichtet wird, können die Applikationseinrichtungen variablere und flexiblere Handhabungsvorrichtungen aufweisen.

Erfindungsgemäß ist eine an dem Transportwagen angeordnete Überwachungseinrichtung mit einem Überwachungsbereich zur Abstandskontrolle der Transportwagen zu Gegenständen und/oder Personen vorgesehen, wobei die Größe des Überwachungsbereichs und/oder die Lage des Überwachungsbereichs relativ zu dem Transportwagen variabel sind. Dadurch werden Kollisionen der Transportwagen mit anderen Transportwagen, mit Teilen der Oberflächenbehandlungsanlage oder mit Personen vermieden. Unter Überwachungsbereich wird der Bereich verstanden, bei dem die Überwachungseinrichtung eine Warnmeldung abgibt, falls sich ein Gegenstand und/oder eine Person in diesem Bereich befinden. Die Überwachungseinrichtung leitet einen Befehl an das Steuerungssystem des Transportwagens, der dazu führt, dass der Transportwagen seine Position anpasst.

Erfindungsgemäß findet eine Anpassung der Größe und/oder Lage des Überwachungsbereichs zwischen dem Betrieb des Transportwagens im Fahrbereich und außerhalb des Fahrbereichs statt, wo sich der Transportwagen von dem Behandlungsraum entfernt. So wird der Überwachungsbereich kleiner werden, wenn sich der Transportwagen im Fahrbereich befindet, da dort die Abstände zwischen Transportwagen und Gegenständen und/oder anderen Transportwagen kleiner als außerhalb des Fahrbereichs sind. Da aufgrund des meist geradlinigen Verlaufs des Fahrbereichs und der meist gleichmäßigen Geschwindigkeit der Transportwagen im Fahrbereich die Gefahr von Kollision kleiner ist, kommt als Grenzfall sogar in Betracht, die Überwachungseinrichtung vollständig im Fahrkanal auszuschalten. Der kleinere Überwachungsbereich führt dazu, dass der Abstand zwischen Transportwagen kleiner eingestellt werden kann, wodurch ein effizienterer Betrieb der Oberflächenbehandlungsanlage erreicht wird.

Gegenstand der Erfindung ist ferner eine Fertigungsanlage zur Herstellung von Fahrzeugen mit einer erfindungsgemäßen Oberflächenbehandlungsanlage.

Aufgabe der Erfindung ist es außerdem, ein Verfahren zur Oberflächenbehandlung von Fahrzeugkarosserien anzugeben, welches den eingangs genannten Gedanken Rechnung trägt.

Erfindungsgemäß wird diese Aufgabe gelöst durch ein Verfahren mit den Merkmalen des Anspruchs 11.

Bei einem Ausführungsbeispiel wird durch eine Atmosphärentrenneinrichtung ein Atmosphärenaustausch zumindest von dem Behandlungsraum zu dem Fahrbereich erschwert oder verhindert.

Bei einem Ausführungsbeispiel ist die Atmosphärentrenneinrichtung ein Gebläse, mittels dessen eine Luftströmung erzeugt wird, die einen Atmosphärenaustausch zumindest von dem Behandlungsraum zu dem Fahrbereich erschwert oder verhindert.

Bei einem anderen Ausführungsbeispiel wird der Transportwagen mittels eines in dem Fahrbereich installierten und von dem mitgeführten Antrieb unabhängigen Antriebssystem in dem Fahrbereich zumindest zeitweise bewegt.

Bei einem Ausführungsbeispiel wird der Abstand aufeinanderfolgender Transportwagen im Fahrbereich verändert. Dadurch wird eine optimale Raumausnutzung und eine Anpassung an unterschiedlich große Karosserien ermöglicht und eine Kollision der Transportwagen und/oder Karosserien mit Gegenständen und/oder Personen verhindert.

Alternativ kann der Abstand der Transportwagen zueinander in Abhängigkeit von der Karosseriegröße der transportierten Fahrzeugkarosserie im Voraus eingestellt und während des Betriebs beibehalten werden.

Bei einem Ausführungsbeispiel wird die Bewegungsrichtung des Transportwagens verändert. Dadurch ergibt sich eine besonders flexible Gestaltung der Fertigungslinie, da die Bearbeitungsstationen nicht zwingend fluchtend hintereinander in einer Linie angeordnet sein müssen. Stattdessen können die Bearbeitungsstationen frei auf der verfügbaren Fläche angeordnet und von den Transportwagen durch Änderung ihrer Bewegungsrichtung angefahren werden.

Bei einem weiteren Aspekt der Erfindung umfasst der Fahrbereich einen rundum durch eine Barriere abgeschlossenen Wartungsbereich zur gefahrlosen Wartung eines defekten Transportwagens. Dabei ist der Wartungsbereich derart angeordnet, dass ein Betrieb der funktionsfähigen Transportwagen während der Wartung möglich ist. Die Barriere umfasst bevorzugt eine Türe, mittels der Wartungspersonal oder Wartungseinrichtungen, beispielsweise ein Roboter, Zugang zu dem defekten Transportwagen haben.

Ferner umfasst der Fahrbereich eine Schub- oder Zugeinrichtung, mit welcher ein defekter Transportwagen aus dem Fahrbereich entfernbar ist. Alternativ kann auch ein funktionsfähiger Transportwagen dazu eingerichtet sein, einen defekten Transportwagen aus dem Fahrbereich zu entfernen. Der funktionsfähige Transportwagen kann den defekten Transportwagen aus dem Fahrbereich schieben oder ziehen.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine erfindungsgemäße Oberflächenbehandlungsanlage gemäß einem ersten Ausführungsbeispiel in einem Schnitt entlang der Förderrichtung F;
- Figur 2: die in Figur 1 gezeigte Oberflächenbehandlungsanlage in einem Schnitt quer zur Förderrichtung F;
- Figur 3: eine Variante der Oberflächenbehandlungsanlage aus Figur 2, wobei die Oberflächenbehandlungsanlage zusätzlich einen Abscheideraum aufweist;
- Figur 4: einen Ausschnitt der Oberflächenbehandlungsanlage aus Figur 3, wobei die Oberflächenbehandlungsanlage ein Gebläse als Atmosphärentrenneinrichtung aufweist;
- Figur 5: den Ausschnitt der Oberflächenbehandlungsanlage aus Figur 4, wobei das Gebläse einen Luftvorhang erzeugt;
- Figur 6: den Ausschnitt der Oberflächenbehandlungsanlage aus Figur 4, wobei das Gebläse Luft aus dem Fahrbereich ansaugt;
- Figur 7: einen Ausschnitt der Oberflächenbehandlungsanlage aus Figur 3, wobei der Transportwagen ein Zahnrad zum formschlüssigen Antreiben des Transportwagens aufweist;
- Figur 8: eine Seitenansicht eines Bereichs der Oberflächenbehandlungsanlage aus Figur 7;
- Figur 9: einen Ausschnitt der Oberflächenbehandlungsanlage aus Figur 3, wobei die Oberflächenbehandlungsanlage eine Kette zum formschlüssigen Antreiben des Transportwagens aufweist;
- Figur 10: eine Seitenansicht eines Bereichs der Oberflächenbehandlungsanlage aus Figur 9;
- Figur 11: einen Ausschnitt der Oberflächenbehandlungsanlage aus Figur 3, wobei die Oberflächenbehandlungsanlage ein Förderband zum Antreiben des Transportwagens aufweist;
- Figur 12: eine Seitenansicht eines Bereichs der Oberflächenbehandlungsanlage aus Figur 11;
- Figur 13: einen erfindungsgemäßen Transportwagen mit einem Überwachungsbereich der Überwachungseinrichtung;
- Figur 14: den Transportwagen aus Figur 13, wobei der Überwachungsbereich kleiner ist im Vergleich zu Figur 13; und
- Figur 15: den Transportwagen aus Figur 13 in einem Fahrbereich.

### BESCHREIBUNG BEVORZUGTER AUSFÜHRUNGSBEISPIELE

### 1. Erstes Ausführungsbeispiel

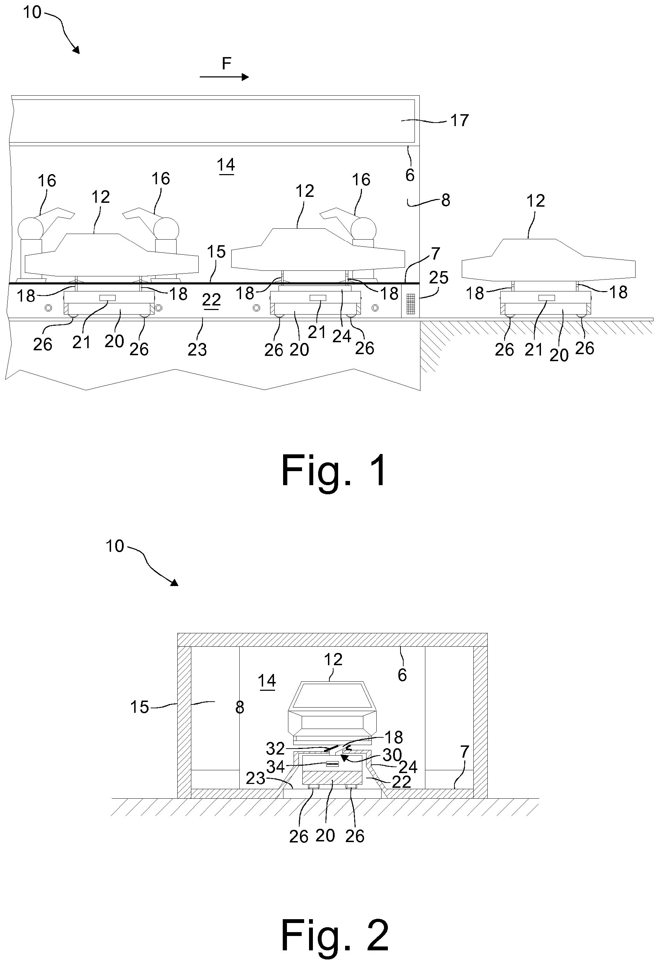

Figur 1 zeigt eine erfindungsgemäße Oberflächenbehandlungsanlage 10 zur Oberflächenbehandlung von Fahrzeugkarosserien 12. Die Oberflächenbehandlungsanlage 10 kann beispielsweise eine Lackieranlage sein. Die Fahrzeugkarosserien 12 sind in einem Behandlungsraum 14 angeordnet, das von einem Gehäuse 15 im Wesentlichen gasdicht begrenzt ist. Das Gehäuse 15 umfasst eine Decke 6, einen Boden 7 und Seitenwände 8. In dem Behandlungsraum 14 sind Applikationseinrichtungen 16 zum Behandeln der Oberflächen der Fahrzeugkarosserien 12 angeordnet. Bei den Applikationseinrichtungen kann es sich z.B. um Roboter handeln, deren beweglicher Arm einen Rotationszerstäuber trägt. Oberhalb des Behandlungsraums 14 ist ein Plenum 17 angeordnet.

Die Fahrzeugkarosserien 12 sind lösbar an Befestigungseinrichtungen 18 befestigt, die mit Transportwagen 20 verbunden sind und von diesen getragen werden. Die Transportwagen 20 sind in einem Fahrbereich 22 mit einem Fahrboden 23 angeordnet. Der Fahrbereich 22 ist unterhalb des Behandlungsraums 14 angeordnet und durch den Boden 7 des Gehäuses 15 von dem Behandlungsraum 14 getrennt. Der Boden 7 trägt im dargestellten Ausführungsbeispiel auch die Applikationseinrichtungen 16. Alternativ hierzu können sich im Behandlungsraum zusätzliche Tragstrukturen wie Längsträger o.ä. erstrecken, welche die Applikationseinrichtungen 16 tragen. Außerdem können die Applikationseinrichtungen 16 auch an einem anderen Teil des Gehäuses 15 befestigt sein, beispielsweise hängend an einer der Seitenwände 8 oder an der Decke 6 des Gehäuses 15.

Die Transportwagen 20 weisen Räder 26 auf, mit denen die Transportwagen 20 auf dem Fahrboden 23 des Fahrbereichs 22 in Förderrichtung F bewegt werden. Die Räder sind bevorzugt omnidirektionale Laufräder. Dadurch sind die Transportwagen 20 besonders flexibel auf engstem Raum rangierbar. Ferner weisen die Transportwagen 20 eigene mitgeführte Antriebe 21 auf.

Die Transportwagen 20 umfassen ausfahrbare Verstellvorrichtungen 24, mit denen die Lage der Fahrzeugkarosserien 12 im Behandlungsraum 14 variiert werden kann. In Figur 1 ist die in Förderrichtung F vordere im Behandlungsraum 14 angeordnete Fahrzeugkarosserie 20 mittels der ausgefahrenen Verstellvorrichtung 24 gegenüber den weiteren Fahrzeugkarosserien 20 erhöht. Die höhere Lage der Fahrzeugkarosserie 20 ermöglicht manchmal einen besseren Bearbeitungszugang der Applikationseinrichtung 16 zu der Fahrzeugkarosserie 20.

Die Verstellvorrichtungen 24 können auch derart ausgeführt sein, dass sie die Befestigungseinrichtungen 18 um eine oder mehrere Achsen schwenken. Die Verstellvorrichtungen 24 können alternativ hierzu in die Befestigungseinrichtungen 18 integriert sein, wie dies etwa bei einem Scherenhubtisch der Fall ist, an dessen Tisch eine Fahrzeugkarosserie 12 direkt befestigt werden kann.

Am Austritt des Fahrbereichs 22 ist eine Schleuse 25 angeordnet. Die Schleuse 25 kann insbesondere ein mechanisches Element sein, beispielsweise eine Klappe. Denkbar ist jedoch auch ein Luftvorhang als Schleuse 25.

Bevorzugt befindet sich eine gleichartige Schleuse auch am nicht dargestellten Eintritt in den Fahrbereich 22. Schleusen können auch am Ein- und Austritt des Behandlungsraums 14 angeordnet sein.

Die Transportwagen 20 fahren mittels eigener mitführbarer Antriebe in Förderrichtung F durch den Fahrbereich 22. Die Fahrzeugkarosserien 12 werden von den Transportwagen 20 durch den Behandlungsraum 14 transportiert und von den Applikationseinrichtungen 16 behandelt. Die Verstellvorrichtungen 24 können dabei bei Bedarf die Fahrzeugkarosserien 12 im Behandlungsraum anheben oder absenken.

Anschließend werden die Fahrzeugkarosserien 12 aus dem Behandlungsraum 14 von den Transportwagen 20 heraustransportiert und können einer weiteren Behandlungsstation zugeführt werden.

Figur 2 zeigt einen Schnitt quer zu der Förderrichtung F der in Figur 1 gezeigten Oberflächenbehandlungsanlage 10. Im Gegensatz zur Figur 1 ist in Figur 2 zusätzlich ein Spalt 30 erkennbar, der in dem Boden 7 des Gehäuses 15 des Behandlungsraums 14 ausgebildet ist. Der Spalt 30 ist mittels einer Abdichtvorrichtung 32 verschlossen, die einen Atmosphärenaustausch zwischen dem Behandlungsraum 14 und dem Fahrbereich 22 verhindert oder erschwert. Dadurch treten keine oder nur geringe Mengen der Atmosphäre des Behandlungsraums 14 in den Fahrbereich 22. Somit gelangen praktisch keine Stoffe, die bei der Behandlung der Fahrzeugkarosserien 12 entstehen oder zur Behandlung benötigt werden (z.B. Lackpartikel), in den Fahrbereich 22. Die Abdichtvorrichtung 32 vermeidet somit eine Beschädigung der Transportwagen 20 und eine Verschmutzung des Fahrbodens 23.

Des Weiteren ist bei dem in Figur 2 gezeigten Ausführungsbeispiel eine Überwachungseinrichtung 34 an dem Transportwagen 20 angeordnet, die den Abstand des Transportwagens 20 zu anderen Gegenständen und/oder Personen kontrolliert. Die Überwachungseinrichtung 34 umfasst einen oder mehrere Abstandsüberwachungssensoren, die in einem Überwachungsbereich U Transportwagen 34 und/oder andere Gegenstände erkennen. Die Überwachungseinrichtung 34 leitet einen Befehl an die Steuerung des Transportwagens 20, wenn sich ein Transportwagen 34 und/oder ein anderer Gegenstand in dem Überwachungsbereich U befindet. Die Steuerung des Transportwagens 20 verarbeitet die Befehle und korrigiert die Position und/oder die Geschwindigkeit des Transportwagens 20 mit Hilfe des Antriebs 21, um den Abstand des Transportwagens 20 zu dem erfassten Transportwagen 34 und/oder anderen Gegenstand zu vergrößern. Wenn sich kein Transportwagen 34 und/oder ein anderer Gegenstand in dem Überwachungsbereich U der Überwachungseinrichtung 34 befindet, leitet diese keine Befehle an die Steuerung des Transportwagens 20.

Falls mehrere Abstandsüberwachungssensoren 34 vorgesehen sind, so können diese verteilt auf der Oberfläche des Transportwagens 20 angeordnet sein, beispielsweise an der Vorder- und Hinterseite und an den Seiten des Transportwagens 20, um eine großflächige Überwachung um den jeweiligen Transportwagen 20 herum zu ermöglichen.

### 2. Zweites Ausführungsbeispiel

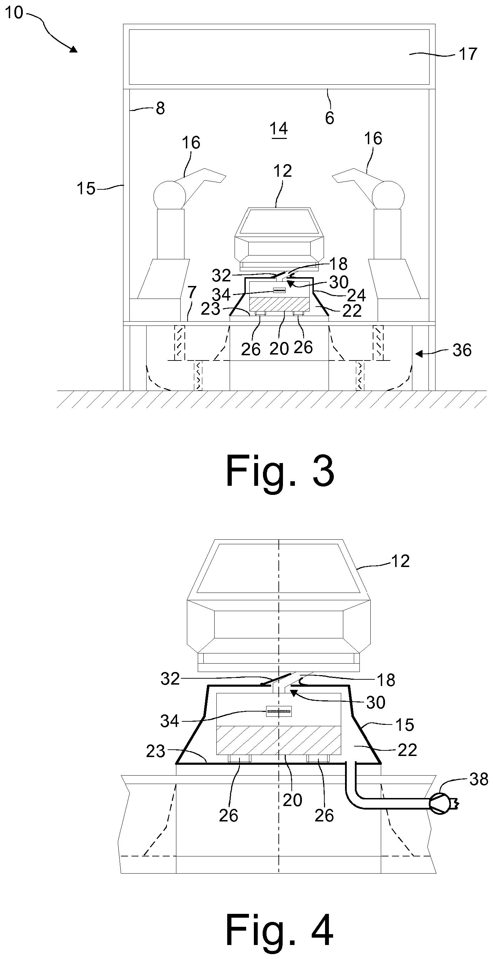

Figur 3 zeigt ein Ausführungsbeispiel der Oberflächenbehandlungsanlage 10 als Trockenanlage. Die Oberflächenbehandlungsanlage 10 der Figur 3 weist im Wesentlichen die Elemente der Oberflächenbehandlungsanlage 10 der Figur 1 auf. Darüber hat die Oberflächenbehandlungsanlage 10 der Figur 3 einen Abscheideraum 36 zum Abscheiden von Stoffen, beispielsweise Overspray, die in dem Behandlungsraum 14 freigesetzt werden. Der Abscheideraum 36 ist unterhalb des Fahrbodens 23 und somit unterhalb des Fahrbereichs 22 und des Behandlungsraums 14 angeordnet. Jedoch ist auch denkbar, dass der Abscheideraum 36 neben dem Fahrbereich 22 oder neben dem Behandlungsraum 14 angeordnet ist.

### 3. Drittes Ausführungsbeispiel

Figur 4 zeigt einen Ausschnitt der Oberflächenbehandlungsanlage 10 der Figur 3. Zusätzlich weist die Oberflächenbehandlungsanlage 10 ein Gebläse 38 auf, welches dem Fahrbereich 22 des Transportwagens 20 Luft zuführt.

Durch die Zuführung der Luft in den Fahrbereich entsteht ein Überdruck in dem Fahrbereich 22, wodurch ein Eindringen der Atmosphäre des Behandlungsraums 14 in den Fahrbereich 22 verhindert oder erschwert wird. Alternativ kann der Überdruck zumindest lokal in der Nähe des Transportwagens 20 mittels eines von dem Transportwagen 20 mitgeführten Druckgasspeichers erzeugt werden. Bei dem im Druckgasspeicher enthaltenen Gas handelt es sich vorzugsweise um Stickstoff oder ein anderes explosionsverhinderndes Gas, um Explosionen zu vermeiden.

### 4. Viertes Ausführungsbeispiel

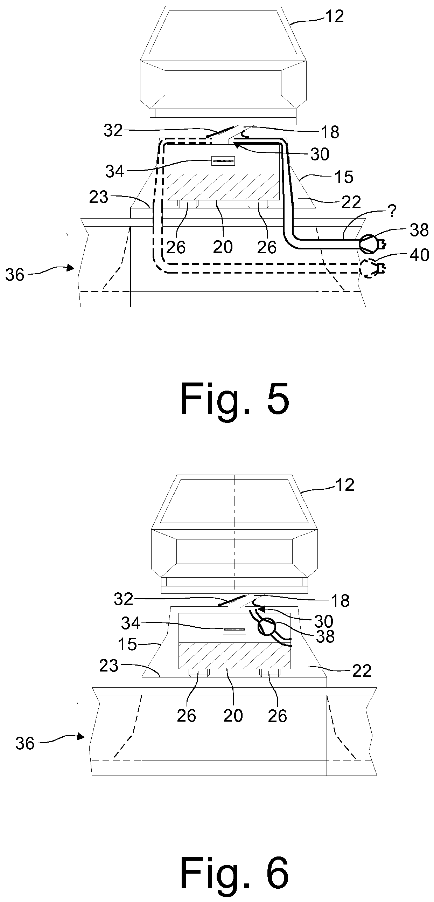

Figur 5 zeigt im Wesentlichen den Ausschnitt der Oberflächenbehandlungsanlage 10 der Figur 4. Im Gegensatz zur Figur 4 ist jedoch in Figur 5 die Luftführung der von dem Gebläse 38 erzeugten Luftströmung derart ausgerichtet, dass ein Luftvorhang an dem Spalt 30 erzeugt wird, wodurch der Spalt 30 zumindest annähernd luftdicht verschlossen wird. Eine Absaugvorrichtung 40 ist ebenfalls in der Oberflächenbehandlungsanlage 10 angeordnet, welche die durch das Gebläse 38 erzeugte Luftströmung an dem Spalt 30 absaugt.

### 5. Fünftes Ausführungsbeispiel

Figur 6 zeigt im Wesentlichen die Oberflächenbehandlungsanlage 10 der Figur 4, jedoch saugt das Gebläse 38 der Figur 6 im Gegensatz zu Figur 4 Luft aus dem Fahrbereich 22 an. Die Luft wird dem Spalt 30 zugeführt, um einen Atmosphärenaustausch von dem Behandlungsraum 14 zu dem Fahrbereich 22 zu erschweren oder zu verhindern. Dies hat den Vorteil, dass nicht in dem gesamten Fahrbereich 22 ein Überdruck erzeugt wird. Das Ansaugen der Luft in dem Fahrbereich 22 erzeugt einen Unterdruck an der Ansaugstelle des Gebläses. Die Luft strömt von der Überdruckstelle zu der Unterdruckstelle, um den Druckunterschied auszugleichen. Dadurch wird eine Zirkulation der angesaugten und abgeblasenen Luft in dem Fahrbereich 22 erzeugt. Folglich strömt die abgeblasene Luft - anders als bei dem in Figur 4 gezeigten Ausführungsbeispiel - nicht durch den Spalt 30 in den Behandlungsraum 14.

Dies hat der Vorteil, dass im Vergleich zu Figur 4 auch ein Atmosphärenaustausch von dem Fahrbereich zu dem Behandlungsraum verhindert wird. Die ständig zirkulierende Luft in dem Fahrbereich 22 bewirkt darüber hinaus eine Kühlung des Transportwagens 20 und dessen Komponenten.

### 6. Sechstes Ausführungsbeispiel

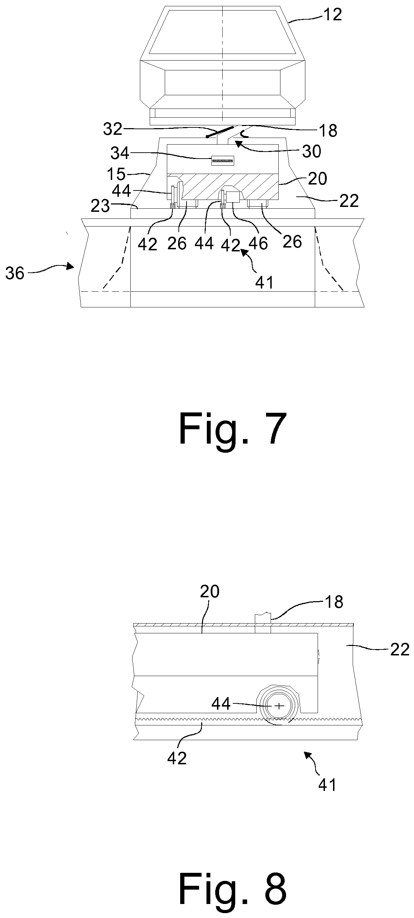

Figuren 7 und 8 zeigen ein Ausführungsbeispiel des erfindungsgemäßen formschlüssigen Antriebssystems 41. Das formschlüssige Antriebssystem 41 umfasst zwei im Fahrbereich 22 ortsfest montierte Zahnstangen 42. Der Transportwagen 20 umfasst zusätzlich Zahnräder 44 und einen Motor 46. Der Motor 46 treibt die Zahnräder 44 an, wodurch die Zahnräder 44 formschlüssig in die Zahnstangen 42 greifen und entlang der Zahnstangen 42 abrollen.

Der Transportwagen 20 wird dadurch entlang der Förderrichtung F formschlüssig angetrieben und rollt dabei auf den Rädern 26 entlang des Fahrbodens 23 ab.

Denkbar ist jedoch auch, dass umgekehrt eine Vielzahl von Zahnrädern 44 entlang des Fahrbereichs ortsfest montiert ist. Die Zahnräder 44 werden beispielsweise mittels eines Elektromotors angetrieben. Die Zahnstange 42 ist in diesem Fall an dem Transportwagen 20 montiert. Die Zahnräder 44 greifen ebenfalls formschlüssig in die Zahnstange 42 ein. Durch das Antreiben der Zahnräder 44 und die formschlüssige Verbindung mit der an dem Transportwagen 20 befestigten Zahnstange 42 wird der Transportwagen 20 entlang des Fahrbereichs 22 verfahren.

### 7. Siebtes Ausführungsbeispiel

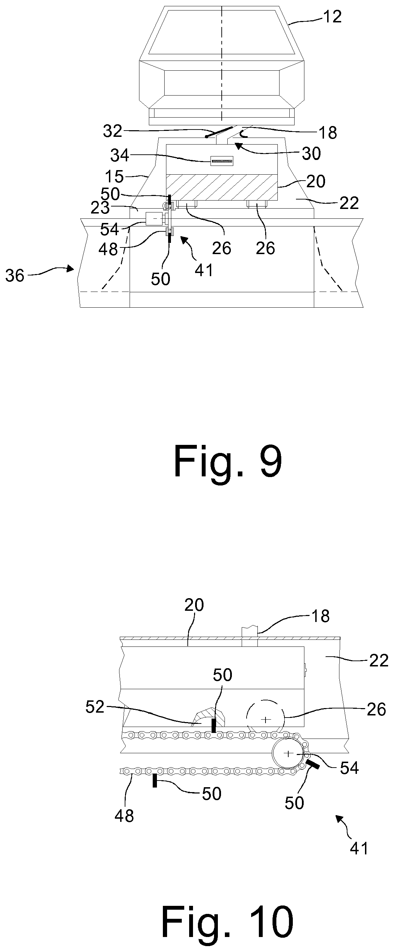

Figuren 9 und 10 zeigen ein zweites Ausführungsbeispiel des erfindungsgemäßen formschlüssigen Antriebssystems 41. Der formschlüssige Antrieb umfasst eine Kette 48 mit daran befestigten Mitnehmern 50 und eine Antriebseinheit 54. Der Transportwagen 20 weist Eingreifelemente 52 auf, in welche die Mitnehmer 50 greifen. Die Antriebseinheit 54 treibt die Kette 48 an und bewegt dadurch den Transportwagen durch den Fahrbereich 22.

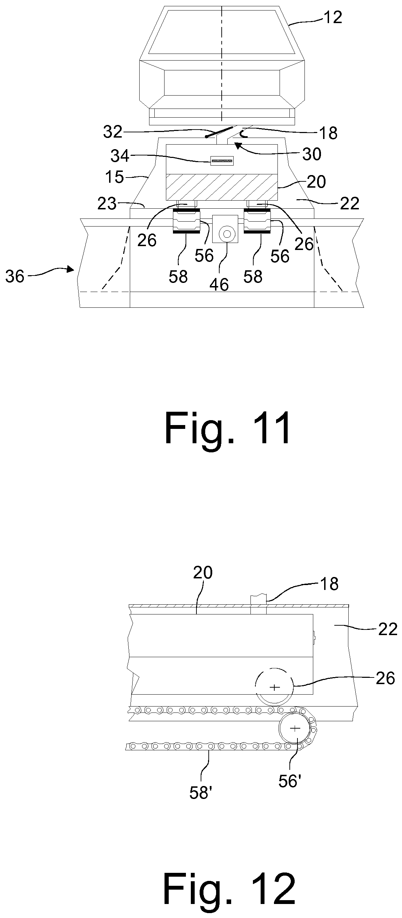

Figuren 11 und 12 zeigen ein alternatives Ausführungsbeispiel eines externen Antriebs, bei dem der Transportwagen 20 von einem translatorisch bewegten Transportmittel getragen und gefördert wird. Figur 11 zeigt zwei solche Transportmittel, die als Transportbänder 58 ausgebildet sind. Zum Bewegen der Transportbänder 58 umfasst der Antrieb Rollen 56, die formschlüssig mit den Transportbändern 58 verbunden sind. Zur formschlüssigen Verbindung greifen Greifelemente, die an den Rollen 56 ausgebildet sind, in Vertiefungen oder Öffnungen der Transportbänder 58 ein. Die Rollen 56 werden mittels eines Motors 46 angetrieben, wodurch die Transportbänder 58 zum Fördern der Transportwagen 20 bewegt werden. Alternativ können die Rollen 56 auch reibschlüssig mit den Transportbändern 58 verbunden sein.

Figur 12 zeigt alternativ eine Kette 58' als Transportmittel zum Fördern der Transportwagen 20. Die Kette 58' wird formschlüssig von Zahnrädern 56' angetrieben.

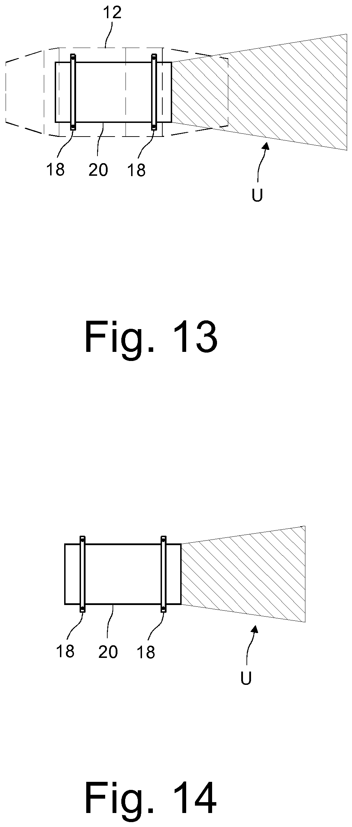

Die Figuren 13 und 14 zeigen den in den Figuren 1 bis 12 dargestellten Transportwagen 20 mit Befestigungseinrichtungen 18. Der Transportwagen 20 ist in Figur 13 mit einer Fahrzeugkarosserie 12 beladen und befindet sich außerhalb des Fahrbereichs 22.

Figur 14 zeigt einen unbeladenen Transportwagen 20, der sich außerhalb des Fahrbereichs 22 befindet. Aufgrund der zusätzlichen Gefahr durch die Fahrzeugkarosserie 12 beim Rangieren des Transportwagens 20 in Figur 13 ist der Überwachungsbereich U größer eingestellt als der Überwachungsbereich U des unbeladenen Transportwagens 20 der Figur 14.

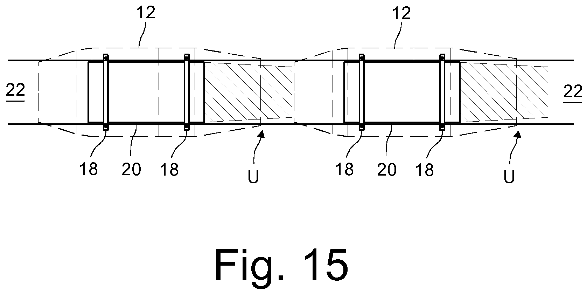

Figur 15 zeigt mit Fahrzeugkarosserien 12 beladene Transportwagen 20 in dem Fahrbereich 22. Im Vergleich zum beladenen Transportwagen der Figur 13 ist der Überwachungsbereich kleiner eingestellt, um den Transportwagen 20 in dem Fahrbereich 22 genauer positionieren zu können, ohne dass die Überwachungseinrichtung 34 permanent Fehlermeldungen erzeugt. Dadurch lassen sich kleinere Abstände zwischen benachbarten Transportwagen 20 im Fahrbereich 22 einstellen, was eine effizientere Raumausnutzung der Oberflächenbehandlungsanlage 10 ermöglicht. Ein kleinerer Überwachungsbereich U ist im Fahrbereich 22 unkritischer als außerhalb des Fahrbereichs 22, da die Gefahr einer Kollision mit Personen und Gegenständen innerhalb des Fahrbereichs 22 gering ist.

Die Größe des Überwachungsbereichs U kann von dem Behandlungsprozess abhängig gemacht werden. Beispielweise kann der Überwachungsbereich U bei einer Beschichtungsanlage, in der die Fahrzeugkarosserien 12 vergleichsweise weit voneinander beabstandet sein sollen, größer als der Überwachungsbereich U bei einer Trockenanlage sein.

## Patentansprüche

1. Oberflächenbehandlungsanlage (10) zur Oberflächenbehandlung von Fahrzeugkarosserien (12) mit:
a) zumindest zwei flurgebundenen Transportwagen (20), die jeweils eine Befestigungseinrichtung (18) aufweisen, an welchen Fahrzeugkarosserien (12) befestigbar sind, wobei jeder Transportwagen (20) mittels eines eigenen mitführbaren Antriebs unabhängig verfahrbar ist;
b) einem im Wesentlichen gasdicht von einem Gehäuse (15) begrenzten Behandlungsraum (14), in dem die Oberflächen der Fahrzeugkarosserien (12) behandelbar sind und in dem zumindest ein Teil der Befestigungseinrichtungen (18) und die daran befestigten Fahrzeugkarosserien (12) mittels des jeweiligen Transportwagens (20) zumindest zeitweise in dem Behandlungsraum (14) bewegbar sind;
c) einem außerhalb des Gehäuses (15) angeordneten Fahrbereich (22), in dem die Transportwagen (20) zumindest zeitweise fahrbar sind, wobei sich der jeweilige Transportwagen (20) in dem Fahrbereich (22) befindet, wenn sich zumindest ein Teil der jeweiligen Befestigungseinrichtung (18) und die daran befestigte Fahrzeugkarosserie (12) in dem Behandlungsraum (14) befindet; und
d) einem Spalt (30), der in dem Gehäuse (15) zwischen dem Fahrbereich (22) und dem Behandlungsraum (14) ausgebildet ist und durch den die Befestigungseinrichtung (18) des jeweiligen Transportwagens (20) hindurchragt, wenn sich der Transportwagen (20) in dem Fahrbereich (22) befindet,
wobei
in dem Fahrbereich (22) eine erste Atmosphäre erzeugbar ist und in dem Behandlungsraum (14) eine von der ersten Atmosphäre verschiedene zweite Atmosphäre erzeugbar ist,
**dadurch gekennzeichnet, dass**
die zumindest zwei Transportwagen zumindest außerhalb des Fahrbereichs (22) spurungebundenen verfahrbar sind, dass
die Oberflächenbehandlungsanlage eine an dem Transportwagen (20) angeordnete Überwachungseinrichtung (34) mit einem Überwachungsbereich U zur Abstandskontrolle der Transportwagen (20) zu Gegenständen und/oder Personen aufweist, dass
die Größe des Überwachungsbereichs und/oder die Lage des Überwachungsbereichs U relativ zu dem Transportwagen (20) variabel ist, und dass
der Überwachungsbereich U kleiner ist, wenn sich der Transportwagen (20) im Fahrbereich (22) befindet.

2. Oberflächenbehandlungsanlage (10) nach Anspruch 1, **dadurch gekennzeichnet, dass** die erste Atmosphäre sich durch zumindest einen Parameter von der zweiten Atmosphäre unterscheidet, wobei der Parameter ausgewählt ist aus der Gruppe bestehend aus: Temperatur, Druck, Luftfeuchtigkeit, Strömungsgeschwindigkeit, Strömungsrichtung und Partikelbelastung.

3. Oberflächenbehandlungsanlage (10) nach Anspruch 1 oder 2, **gekennzeichnet durch** eine Atmosphärentrenneinrichtung (32; 38; 40), die einen Atmosphärenaustausch zumindest von dem Behandlungsraum (14) zu dem Fahrbereich (22) erschwert oder verhindert.

4. Oberflächenbehandlungsanlage (10) nach Anspruch 3, **dadurch gekennzeichnet, dass** die Atmosphärentrenneinrichtung eine Abdichtvorrichtung (32) ist, die in oder an dem Spalt (30) angeordnet ist.

5. Oberflächenbehandlungsanlage (10) nach Anspruch 3, **dadurch gekennzeichnet, dass** die Atmosphärentrenneinrichtung (32; 38; 40) ein Gebläse ist (38), mittels dessen eine Luftströmung erzeugbar ist, die einen Atmosphärenaustausch zumindest von dem Behandlungsraum (14) zu dem Fahrbereich (22) erschwert oder verhindert.

6. Oberflächenbehandlungsanlage (10) nach Anspruch 5, **dadurch gekennzeichnet, dass** die Luftströmung ein Luftvorhang ist, der den Spalt (30) zumindest annähernd luftdicht verschließt.

7. Oberflächenbehandlungsanlage (10) nach einem der vorhergehenden Ansprüche, **dadurch gekennzeichnet, dass** in dem Fahrbereich (22) der Transportwagen (20) mittels eines in dem Fahrbereich (22) installierten und von dem mitführbaren Antrieb unabhängigen Antriebssystem (41) zumindest zeitweise bewegbar ist.

8. Oberflächenbehandlungsanlage (10) nach Anspruch 7, **dadurch gekennzeichnet, dass** das Antriebssystem (41) zumindest in einem Teil des Fahrbereichs (22) formschlüssig mit dem Transportwagen (20) verbunden ist.

9. Oberflächenbehandlungsanlage (10) nach einem der vorhergehenden Ansprüche, **gekennzeichnet durch** eine Verstellvorrichtung (24), die dazu eingerichtet ist, die Befestigungseinrichtung (18) und die daran befestigte Fahrzeugkarosserie (12) in variabler Höhe im Behandlungsraum (14) bereitzustellen.

10. Fertigungsanlage zur Herstellung von Fahrzeugen mit einer Oberflächenbehandlungsanlage (10) nach einem der vorhergehenden Ansprüche.

11. Verfahren zur Oberflächenbehandlung von Fahrzeugkarosserien (12), bei welchem:
a) zumindest zwei flurgebundene Transportwagen (20), die jeweils eine Befestigungseinrichtung (18) aufweisen, an der eine Fahrzeugkarosserie (12) befestigt ist, wobei jeder Transportwagen (20) mittels eines eigenen mitgeführten Antriebs unabhängig verfahren wird;
b) zumindest ein Teil der Befestigungseinrichtungen (18) und die an den Befestigungseinrichtungen (18) befestigten Fahrzeugkarosserien (12) werden mittels des Transportwagens (20) zumindest zeitweise in einem im Wesentlichen gasdicht von einem Gehäuse (15) begrenzten Behandlungsraum (14) bewegt, wobei die Fahrzeugkarosserien (12) in dem Behandlungsraum (14) behandelt werden;
c) die Transportwagen (20) werden zumindest zeitweise in einem außerhalb des Gehäuses (15) angeordneten Fahrbereich (22) gefahren, wobei sich der jeweilige Transportwagen (20) in dem Fahrbereich (22) befindet, wenn sich zumindest ein Teil der jeweiligen Befestigungseinrichtung (18) und die daran befestigte Fahrzeugkarosserie (18) in dem Behandlungsraum (14) befindet; und
d) die Befestigungseinrichtung (18) des jeweiligen Transportwagens (20) ragt durch einen in dem Gehäuse (15) zwischen dem Fahrbereich (22) und dem Behandlungsraum (14) ausgebildeten Spalt (30), wenn sich der Transportwagen (20) in dem Fahrbereich (22) befindet,
wobei in dem Fahrbereich (22) eine erste Atmosphäre erzeugt wird und in dem Behandlungsraum (14) eine von der ersten Atmosphäre abweichende zweite Atmosphäre erzeugt wird,
**dadurch gekennzeichnet, dass**
die zumindest zwei Transportwagen (20) zumindest außerhalb des Fahrbereichs (22) spurungebunden fahren, und dass
eine an dem Transportwagen (20) angeordnete Überwachungseinrichtung (34) mit einem Überwachungsbereich den Abstand der Transportwagen (20) zu Gegenständen und/oder Personen kontrolliert, wobei die Größe des Überwachungsbereichs U und/oder die Lage des Überwachungsbereichs U relativ zu dem Transportwagen (20) variabel ist, und wobei der Überwachungsbereich U beim Eintritt des Transportwagens (20) in den Fahrbereich (22) verkleinert wird und/oder beim Austritt aus dem Fahrbereich (22) vergrößert wird.

12. Verfahren zur Oberflächenbehandlung von Fahrzeugkarosserien (12) nach Anspruch 11, **dadurch gekennzeichnet, dass** der Abstand aufeinanderfolgender Transportwagen (20) im Fahrbereich (22) und/oder die Bewegungsrichtung der Transportwagen (20) verändert wird.

## Claims

1. Surface treatment installation (10) for the surface treatment of vehicle bodies (12) with:
a) at least two floor-bound transport carriages (20), each of which has a fastening device (18) to which vehicle bodies (12) can be fastened, wherein each transport carriage (20) can be moved independently by means of its own entrainable drive;
b) a treatment space (14) which is delimited in a substantially gas-tight manner by a housing (15) and in which the surfaces of the vehicle bodies (12) can be treated and in which at least a portion of the fastening devices (18) and the vehicle bodies (12) fastened thereto can be moved at least temporarily in the treatment space (14) by means of the respective transport carriage (20)
c) a moving area (22) arranged outside the housing (15), in which the transport carriages (20) are at least temporarily movable, wherein the respective transport carriage (20) is located in the moving area (22) when at least a portion of the respective fastening device (18) and the vehicle body (12) fastened thereto is located in the treatment space (14); and
d) a gap (30) formed in the housing (15) between the moving area (22) and the treatment space (14) and through which the fastening device (18) of the respective transport carriage (20) projects when the transport carriage (20) is located in the moving area (22),
wherein
a first atmosphere can be generated in the moving area (22) and a second atmosphere different from the first atmosphere can be generated in the treatment space (14)
**characterized in that**
the at least two transport carriages can be moved in a trackless manner at least outside the moving area (22), **in that**
the surface treatment installation has a monitoring device (34) arranged on the transport carriage (20) which has a monitoring area U for monitoring the distance of the transport carriages (20) from objects and/or persons, **in that**
the size of the monitoring area and/or the position of the monitoring area U relative to the transport carriage (20) is variable, and **in that**
the monitoring area U is smaller when the transport carriage (20) is in the moving area (22).

2. Surface treatment installation (10) according to claim 1, **characterized in that** the first atmosphere differs from the second atmosphere by at least one parameter, wherein the parameter is selected from the group consisting of: Temperature, pressure, humidity, flow velocity, flow direction, and particle loading.

3. Surface treatment installation (10) according to claim 1 or 2, **characterized by** an atmosphere separation device (32; 38; 40) which impedes or prevents an exchange of atmosphere at least from the treatment space (14) to the moving area (22).

4. Surface treatment installation (10) according to claim 3, **characterized in that** the atmosphere separation device is a sealing device (32) arranged in or at the gap (30).

5. Surface treatment installation (10) according to claim 3, **characterized in that** the atmosphere separating device (32; 38; 40) is a blower (38) by means of which an air flow can be generated which impedes or prevents an exchange of atmosphere at least from the treatment space (14) to the moving area (22).

6. Surface treatment installation (10) according to claim 5, **characterized in that** the air flow is an air curtain which closes the gap (30) at least approximately airtight.

7. Surface treatment installation (10) according to one of the preceding claims, **characterized in that** in the moving area (22) the transport carriage (20) is at least temporarily movable by means of a drive system (41) installed in the moving area (22) and independent of the entrainable drive.

8. Surface treatment installation (10) according to claim 7, **characterized in that** the drive system (41) is positively connected to the transport carriage (20) at least in a portion of the moving area (22).

9. Surface treatment installation (10) according to one of the preceding claims, **characterized by** an adjusting device (24) which is set up to provide the fastening device (18) and the vehicle body (12) fastened thereto at a variable height in the treatment space (14).

10. Vehicle manufacturing plant comprising a surface treatment installation (10) according to any one of the preceding claims.

11. Method for surface treatment of vehicle bodies (12), in which:
a) at least two floor-bound transport carriages (20), each having a fastening device (18) to which a vehicle body (12) is fastened, wherein each transport carriage (20) is independently moved by means of its own entrained drive;
b) at least a portion of the fastening devices (18) and the vehicle bodies (12) fastened to the fastening devices (18) are moved by means of the transport carriage (20) at least temporarily in a treatment space (14) delimited in a substantially gas-tight manner by a housing (15), wherein the vehicle bodies (12) are treated in the treatment space (14);
c) the transport carriages (20) are moved at least temporarily in a moving area (22) arranged outside the housing (15), wherein the respective transport carriage (20) is located in the moving area (22) when at least a portion of the respective fastening device (18) and the vehicle body (18) fastened thereto is located in the treatment space (14); and
d) the fastening device (18) of the respective transport carriage (20) projects through a gap (30) formed in the housing (15) between the moving area (22) and the treatment space (14) when the transport carriage (20) is located in the moving area (22),
wherein a first atmosphere is generated in the moving area (22) and a second atmosphere different from the first atmosphere is generated in the treatment space (14)
**characterized in that**
the at least two transport carriages (20) move at least outside the moving area (22) in a trackless manner, and **in that**
a monitoring device (34) arranged on the transport carriage (20) with a monitoring area controls the distance of the transport carriages (20) from objects and/or persons, wherein the size of the monitoring area U and/or the position of the monitoring area U relative to the transport carriage (20) is variable, and wherein the monitoring area U is reduced when the transport carriage (20) enters the moving area (22) and/or is increased when it leaves the moving area (22).

12. The method for surface treatment of vehicle bodies (12) according to claim 11, **characterized in that** the distance between successive transport carriages (20) in the moving area (22) and/or the direction of movement of the transport carriages (20) is changed.

## Revendications

1. Installation de traitement de surface (10) pour le traitement de surface de carrosseries de véhicule (12) avec :
a) au moins deux wagons de transport liés au sol (20) qui présentent chacun un dispositif de fixation (18), auxquels des carrosseries de véhicule (12) peuvent être fixées, dans laquelle chaque wagon de transport (20) peut être déplacé indépendamment au moyen d'un entraînement propre pouvant être transporté ;
b) un espace de traitement (14) limité par un logement (15) de manière essentiellement étanche au gaz dans lequel les surfaces des carrosseries de véhicule (12) peuvent être traitées et dans lequel au moins une partie des dispositifs de fixation (18) et les carrosseries de véhicule (12) fixées à eux peuvent être déplacées au moins temporairement dans l'espace de traitement (14) au moyen du wagon de transport respectif (20) ;
c) une région de conduite (22) disposée en dehors du logement (15) dans laquelle les wagons de transport (20) peuvent être conduits au moins temporairement, dans laquelle le wagon de transport respectif (20) se trouve dans la région de conduite (22) lorsqu'au moins une partie du dispositif de fixation respectif (18) et la carrosserie de véhicule (12) fixée à lui se trouvent dans l'espace de traitement (14) ; et
d) une fente (30) qui est réalisée dans le logement (15) entre la région de conduite (22) et l'espace de traitement (14) et à travers laquelle le dispositif de fixation (18) du wagon de transport respectif (20) dépasse lorsque le wagon de transport (20) se trouve dans la région de conduite (22),
dans laquelle
une première atmosphère peut être générée dans la région de conduite (22) et une seconde atmosphère différente de la première atmosphère peut être générée dans l'espace de traitement (14),
**caractérisée en ce que**
les au moins deux wagons de transport peuvent être déplacés de manière non liée au sol au moins en dehors de la région de conduite (22), que
l'installation de traitement de surface présente un dispositif de surveillance (34) disposé sur le wagon de transport (20) avec une région de surveillance U pour le contrôle d'écart des wagons de transport (20) à des objets et/ou personnes, que
la taille de la région de surveillance et/ou la position de la région de surveillance U est variable par rapport au wagon de transport (20), et que
la région de surveillance U est plus petite lorsque le wagon de transport (20) se trouve dans la région de conduite (22).

2. Installation de traitement de surface (10) selon la revendication 1, **caractérisée en ce que** la première atmosphère se différencie de la seconde atmosphère par au moins un paramètre, dans laquelle le paramètre est sélectionné parmi le groupe constitué de : température, pression, humidité de l'air, vitesse d'écoulement, direction d'écoulement et charge particulaire.

3. Installation de traitement de surface (10) selon la revendication 1 ou 2, **caractérisée par** un dispositif de séparation d'atmosphère (32 ; 38 ; 40) qui entrave ou empêche un échange d'atmosphère au moins de l'espace de traitement (14) à la région de conduite (22).

4. Installation de traitement de surface (10) selon la revendication 3, **caractérisée en ce que** le dispositif de séparation d'atmosphère est un dispositif d'étanchéification (32) qui est disposé dans ou sur la fente (30).

5. Installation de traitement de surface (10) selon la revendication 3, **caractérisée en ce que** le dispositif de séparation d'atmosphère (32 ; 38 ; 40) est une soufflante (38) au moyen de laquelle un écoulement d'air peut être généré, lequel entrave ou empêche un échange d'atmosphère au moins de l'espace de traitement (14) à la région de conduite (22).

6. Installation de traitement de surface (10) selon la revendication 5, **caractérisée en ce que** l'écoulement d'air est un rideau d'air qui ferme la fente (30) de manière au moins approximativement étanche à l'air.

7. Installation de traitement de surface (10) selon une des revendications précédentes, **caractérisée en ce que** le wagon de transport (20) peut être déplacé au moins temporairement dans la région de conduite (22) au moyen d'un système d'entraînement (41) installé dans la région de conduite (22) et indépendant de l'entraînement pouvant être transporté.

8. Installation de traitement de surface (10) selon la revendication 7, **caractérisée en ce que** le système d'entraînement (41) est connectée par conjugaison de formes au wagon de transport (20) au moins dans une partie de la région de conduite (22).

9. Installation de traitement de surface (10) selon une des revendications précédentes, **caractérisée par** un dispositif de réglage (24) qui est configuré pour mettre à disposition le dispositif de fixation (18) et la carrosserie de véhicule (12) fixée à lui à hauteur variable dans l'espace de traitement (14).

10. Installation de production pour la fabrication de véhicules avec une installation de traitement de surface (10) selon une des revendications précédentes.

11. Procédé de traitement de surface de carrosseries de véhicule (12), lors duquel :
a) au moins deux wagons de transport liés au sol (20) qui présentent chacun un dispositif de fixation (18), auxquels une carrosserie de véhicule (12) est fixée, dans lequel chaque wagon de transport (20) est déplacé indépendamment au moyen d'un entraînement propre transporté ;
b) au moins une partie des dispositifs de fixation (18) et les carrosseries de véhicule (12) fixées aux dispositifs de fixation (18) sont déplacées au moins temporairement dans un espace de traitement (14) limité par un logement (15) de manière essentiellement étanche au gaz au moyen du wagon de transport (20), dans lequel les carrosseries de véhicule (12) sont traitées dans l'espace de traitement (14) ;
c) les wagons de transport (20) sont conduits au moins temporairement dans une région de conduite (22) disposée en dehors du logement (15), dans lequel le wagon de transport respectif (20) se trouve dans la région de conduite (22) lorsqu'au moins une partie du dispositif de fixation respectif (18) et la carrosserie de véhicule (18) fixée à lui se trouvent dans l'espace de traitement (14) ; et
d) le dispositif de fixation (18) du wagon de transport respectif (20) dépasse à travers une fente (30) réalisée dans le logement (15) entre la région de conduite (22) et l'espace de traitement (14) lorsque le wagon de transport (20) se trouve dans la région de conduite (22),
dans lequel une première atmosphère est générée dans la région de conduite (22) et une seconde atmosphère variant de la première atmosphère est générée dans l'espace de traitement (14),
**caractérisé en ce que**
les au moins deux wagons de transport (20) sont déplacés de manière non liée au sol au moins en dehors de la région de conduite (22), et que
un dispositif de surveillance (34) disposé sur le wagon de transport (20) avec une région de surveillance contrôle l'écart des wagons de transport (20) à des objets et/ou personnes, dans lequel la taille de la région de surveillance U et/ou la position de la région de surveillance U est variable par rapport au wagon de transport (20), et dans lequel la région de surveillance U est réduite lors de l'entrée du wagon de transport (20) dans la région de conduite (22) et/ou est agrandie lors de la sortie de la région de conduite (22).

12. Procédé de traitement de surface de carrosseries de véhicule (12) selon la revendication 11, **caractérisé en ce que** l'écart de wagons de transport successifs (20) dans la région de conduite (22) et/ou la direction de déplacement des wagons de transport (20) est modifié(e).
